# EUROPÄISCHE PATENTSCHRIFT

(11) **EP 3 112 237 B1**
(45) Veröffentlichungstag und Bekanntmachung des Hinweises auf die Patenterteilung: **11.07.2018**
(21) Anmeldenummer: 16000564.1
(22) Anmeldetag: 09.03.2016
(51) Int. Cl.: B62D 35/00, B62D 37/02

(54) **KRAFTFAHRZEUG MIT EINER LUFTLEITELEMENTANORDNUNG**
MOTOR VEHICLE WITH AN AIR GUIDE ELEMENT ASSEMBLY
VEHICULE AUTOMOBILE DOTE D'UN DISPOSITIF DE CONDUITE D'AIR

(30) Priorität: 01.07.2015 DE 102015008475
(43) Veröffentlichungstag der Anmeldung: 04.01.2017
(73) Patentinhaber: AUDI AG, 85045 Ingolstadt (DE)
(72) Erfinder: Behle, Christoph, DE - 85309 Pörnbach (DE)

(56) Entgegenhaltungen:
- DE-A1- 3 711 386
- DE-A1-102012 111 849
- FR-A1- 2 982 567
- FR-A3- 2 890 638
- JP-A- H02 117 476

## Beschreibung

Die Erfindung betrifft ein Kraftfahrzeug mit einer Luftleitelementanordnung, die wenigstens ein Luftleitelement aufweist und im Bereich einer Heckscheibe des Kraftfahrzeugs angeordnet ist.

Es sind Anbauteile für Kraftfahrzeuge, insbesondere Luftleitelemente, bekannt, die die Strömung um das Kraftfahrzeug beziehungsweise die Aerodynamik des Kraftfahrzeugs verbessern. Die Aerodynamik am Kraftfahrzeug wird hierbei insbesondere durch die Silhouette und die dort angebrachten Anbauteile beeinflusst.

Neben dem Einfluss, den derartige Luftleitelemente auf die Aerodynamik des Kraftfahrzeugs besitzen, wird das optische Erscheinungsbild des Kraftfahrzeugs, insbesondere die Silhouette des Kraftfahrzeugs, durch derartige Luftleitelemente beziehungsweise Luftleitelementanordnungen beeinflusst.

Derartige Spoiler beziehungsweise Luftleitelemente sind üblicherweise fest oder ausfahrbar am Kraftfahrzeug angeordnet. Abhängig von den jeweiligen Fahrsituationen beziehungsweise Anforderungen ist es ebenfalls bekannt das jeweilige Luftleitelement auszufahren beziehungsweise die Neigung des Luftleitelements und damit den Anstellwinkel zu verändern. Somit kann die Umströmung und die Aerodynamik beeinflusst werden.

Speziell im Hinblick auf Sport Utility Vehicles (SUV) und Kraftfahrzeuge mit ähnlicher Silhouette können im Bereich der Heckscheibe, insbesondere im Bereich der mittleren Heckscheibe, Strömungsablösungen auftreten. Um dies zu vermeiden, ist es bekannt, scheibenfeste Luftleitelemente zu verwenden, die diesen Strömungsablösungen entgegen wirken. Nachteilig an derartigen, scheibenfesten Luftleitelemente ist, dass diese die Hecksicht, also das Sichtfeld des Fahrers beim Blick durch die Heckscheibe stören und von einigen Benutzern hinsichtlich der daraus resultierenden Silhouette des Kraftfahrzeugs abgelehnt werden.
Die FR 2 890 638 A3 offenbart ein Kraftfahrzeug gemäß dem Oberbegriff des Anspruchs 1. Der Erfindung liegt daher die Aufgabe zugrunde, ein Kraftfahrzeug anzugeben, bei dem eine Strömungsablösung an der Heckscheibe vermieden wird und das ein ansprechendes optisches Erscheinungsbild aufweist.
Zur Lösung dieser Aufgabe ist bei einem Kraftfahrzeug der eingangs genannten Art erfindungsgemäß vorgesehen, dass das wenigstens eine Luftleitelement mittels wenigstens eines Aktors entlang einer Führung bewegbar ist, die seitlich an der Heckscheibe des Kraftfahrzeugs angeordnet ist.
Das erfindungsgemäße Prinzip beruht auf der Idee, dass das Luftleitelement entlang der Heckscheibe bewegbar ist. Das Luftleitelement ist seitlich an der Heckscheibe an eine Führung gekoppelt, entlang der es bewegbar ist. Dadurch wird ermöglicht, dass das Luftleitelement beispielsweise im Stand oder bei niedrigen Geschwindigkeiten, mithin also in Situationen, in denen ein Luftleitelement einen vernachlässigbaren Einfluss auf die Aerodynamik des Kraftfahrzeugs besitzt in einer Position, bspw. an der Dachkante, angeordnet sein kann, die ein ansprechendes optisches Erscheinungsbild gewährleistet. Bei höheren Geschwindigkeiten über 80 km/h kann das Luftleitelement in eine Position im Bereich der Mitte der Heckscheibe bewegt werden, um eine Strömungsablösung in diesem Bereich zu vermeiden.
Das Luftleitelement des erfindungsgemäßen Kraftfahrzeugs ist sonach beliebig in jeder Situation in jede Position entlang der Führung bewegbar. Sonach kann eine Strömungsablösung, beispielsweise im Bereich der mittleren Heckscheibe, vermieden werden, indem das Luftleitelement bei einer vorher festgelegten Geschwindigkeit entlang der Heckscheibe in die entsprechende Position bewegt werden kann. Das Luftleitelement wird somit je nach gewünschter Aerodynamik entlang der Führung und somit in eine Position entlang der Heckscheibe des Kraftfahrzeugs bewegt. Gemäß der Erfindung ist der wenigstens eine Aktor dabei an dem wenigstens einen Luftleitelement angeordnet. Der Aktor ist somit in das Luftleitelement integriert und bewegt sich mit diesem. Vorzugsweise ist der Aktor von dem Luftleitelement umgeben beziehungsweise von diesem verdeckt. Das optische Erscheinungsbild des Kraftfahrzeugs wird sonach durch den Aktor nicht beeinflusst.
Besonders bevorzugt weist der wenigstens eine Aktor eine Antriebswelle auf, die über einen Riementrieb mit einer ein Zahnrad aufweisenden Abtriebswelle verbunden ist, die drehbar an dem Luftleitelement gelagert ist oder der Aktor weist ein antreibbares Zahnrad auf, das mit einer in der Führung angeordneten Zahnstange kämmt. Der Antrieb kann sonach eine Antriebswelle aufweisen, an der ein Zahnrad angeordnet ist, das direkt mit der Zahnstange, die in der Führung angeordnet ist, kämmt. Die das Zahnrad aufweisende Antriebswelle des Aktors wird sonach direkt durch den Aktor angetrieben und bewegt das Luftleitelement durch den Eingriff mit der Zahnstange, die in der Führung angeordnet ist.
Alternativ treibt die Antriebswelle des Aktors einen Riementrieb an, der mit einer Abtriebswelle in Wirkverbindung steht. Die Abtriebswelle weist wiederum ein Zahnrad auf, das mit der Zahnstange, die in der Führung angeordnet ist, kämmt.
Das erfindungsgemäße Kraftfahrzeug kann dahingehend weitergebildet sein, dass die Luftleitelementanordnung zwei einander gegenüberliegende Führungen aufweist, die seitlich an der Heckscheibe angeordnet sind. Durch die zwei gegenüberliegend angeordneten Führungen wird eine gleichmäßige und sichere Führung des Luftleitelements gewährleistet beziehungsweise verbessert. Die Führungen können je nach verwendetem Aktor beziehungsweise je nach Anordnung des Aktors am Luftleitelement derart an der Heckscheibe angeordnet sein, dass sich die beiden Führungen gegenüberliegen, oder das die Öffnungen der Führungen von der Heckscheibe aus gesehen nach oben weisen. Besonders bevorzugt weist das Luftleitelement wenigstens ein in der wenigstens einen Führung und entlang der Führung bewegbares Halteelement auf, über das das Luftleitelement mit der Führung verbunden ist. Das Halteelement beziehungsweise die Halteelemente greifen dabei in die Führung ein und fixieren das Luftleitelement in der Richtung senkrecht zur Heckscheibe. Das Luftleitelement bleibt in der Richtung der Führung selbstverständlich bewegbar. Insbesondere kann das Halteelement eine Hinterschneidung aufweisen, die in die Führung beispielsweise in Form einer Nut eingreift. Das Haltelement kann dabei derart in die Führung eingreifen, dass es die darin angeordnete Zahnstange nicht berührt. Das Zahnrad, das in der Führung mit der darin angeordneten Zahnstange kämmt, kann beispielsweise einen größeren Radius aufweisen, als das Halteelement und somit mit der Zahnstange kämmen. Alternativ kann das Halteelement selbstverständlich auch einen L-förmigen Querschnitt aufweisen und somit derart in die Führung eingreifen, dass es die Zahnstange nicht berührt. Selbstverständlich ist es möglich, dass an dem Luftleitelement für jede Führung mehr als ein Halteelement angeordnet ist. Insbesondere kann je ein Halteelement vor und nach dem Zahnrad in die Führung eingreifen, in Bewegungsrichtung des Luftleitelements, entlang der Führung gesehen.

Eine Weiterbildung des erfindungsgemäßen Kraftfahrzeugs kann darin bestehen, dass der Aktor mit zwei Zahnrädern verbunden ist, die jeweils mit einer der in den Führungen angeordneten Zahnstangen kämmen. Der Aktor kann somit beispielsweise zwei Abtriebswellen aufweisen, die jeweils ein Zahnrad aufweisen. Jedes der Zahnräder kämmt schließlich mit jeweils einer der in den Führungen angeordneten Zahnstangen. Dies bietet den Vorteil, dass ein Verklemmen des Luftleitelements zwischen den beiden Führungen vermieden wird, da die Abtriebswellen, die je ein Zahnrad aufweisen, an demselben Aktor angeordnet sind, und somit synchron angetrieben werden. Gemäß einer alternativen Ausgestaltung des erfindungsgemäßen Kraftfahrzeugs kann es vorgesehen sein, dass die Luftleitelementanordnung zwei Aktoren aufweist, von denen jeder mit jeweils einem Zahnrad verbunden ist, wobei die Zahnräder mit jeweils einer Zahnstange in der Führung kämmen. Sonach kann am Luftleitelement, beispielsweise an jedem Ende des Luftleitelements oder an einer anderen festgelegten Position am Luftleitelement je ein Aktor angeordnet sein. Jeder der Aktoren treibt eine Antriebswelle an, die ein Zahnrad aufweist, das mit einer der in den Führungen angeordneten Zahnstangen kämmt. Selbstverständlich ist es ebenfalls möglich die beiden Aktoren gemäß der zuvor dargelegten Alternative in Form eines Aktors mit Antriebswelle, der über einen Riementrieb eine mit einem Zahnrad versehene Abtriebswelle antreibt, auszubilden.

Besonders bevorzugt sind die beiden Aktoren in dieser Ausgestaltung miteinander gekoppelt oder synchron antreibbar. Insbesondere kann hierbei über eine Steuerungseinrichtung sichergestellt werden, dass die beiden Aktoren synchron angetrieben werden. Alternativ kann über beispielsweise eine mechanische Kopplung ein gleichartiger Antrieb der Aktoren sichergestellt werden. Dies bietet den Vorteil, dass ein Verklemmen beziehungsweise Verkanten des Luftleitelements zwischen den beiden Führungen vermieden werden kann.

Besonders bevorzugt ist bei dem erfindungsgemäßen Kraftfahrzeug vorgesehen, dass die Luftleitelementanordnung einen Neigungsversteller aufweist, der dazu ausgebildet ist, die Neigung des wenigstens einen Luftleitelements um die Querachse des Kraftfahrzeugs zu verändern. Der Winkel zwischen der Heckscheibe und dem wenigstens einen Luftleitelement kann somit durch den Neigungsversteller verändert werden. Mithin kann das Luftleitelement stärker in die Umströmung des Kraftfahrzeugs eingreifen oder weiter in Richtung der Heckscheibe bewegt werden. Über den Neigungsversteller ist somit eine direkte Einflussnahme auf die Aerodynamik des Kraftfahrzeugs möglich.

Ferner kann bei dem erfindungsgemäßen Kraftfahrzeug vorgesehen sein, dass die Luftleitelementanordnung einen Längenversteller aufweist, der dazu ausgebildet ist, das Luftleitelement in der Richtung des freien Endes des Luftleitelements zu verlängern oder zu verkürzen. Der Längenversteller und/oder das Luftleitelement weisen hierzu beispielsweise eine teleskopische Struktur auf, die über ein Einfahren beziehungsweise ein Ausfahren des mit dem Luftleitelement gekoppelten Längenverstellers das Luftleitelement in Richtung dessen freien Endes verlängert oder verkürzt. Es ist dadurch möglich, stärker beziehungsweise schwächer in die Aerodynamik beziehungsweise die Umströmung des Kraftfahrzeugs einzugreifen.

Selbstverständlich ist es auch im Hinblick auf die beiden Versteller möglich, mehr als jeweils einen Neigungsversteller und/oder Längenversteller an der Luftleitelementordnung des erfindungsgemäßen Kraftfahrzeugs vorzusehen.

Die Erfindung wird nachfolgend anhand von Ausführungsbeispielen unter Bezugnahme auf die Zeichnungen näher erläutert. Die Figuren sind schematische Darstellungen und zeigen:
- Fig. 1: ein erfindungsgemäßes Kraftfahrzeug in einer Seitenansicht;
- Fig. 2: einen ersten Ausschnitt des erfindungsgemäßen Kraftfahrzeugs von Fig. 1 im Bereich der Heckscheibe;
- Fig. 3: einen zweiten Ausschnitt des erfindungsgemäßen Kraftfahrzeugs von Fig. 1 im Bereich der Heckscheibe;
- Fig. 4: eine Luftleitelementanordnung des erfindungsgemäßen Kraftfahrzeugs von Fig. 1 gemäß einem ersten Ausführungsbeispiel; und
- Fig. 5: eine Luftleitelementanordnung des erfindungsgemäßen Kraftfahrzeugs von Fig. 1 gemäß einem zweiten Ausführungsbeispiel.

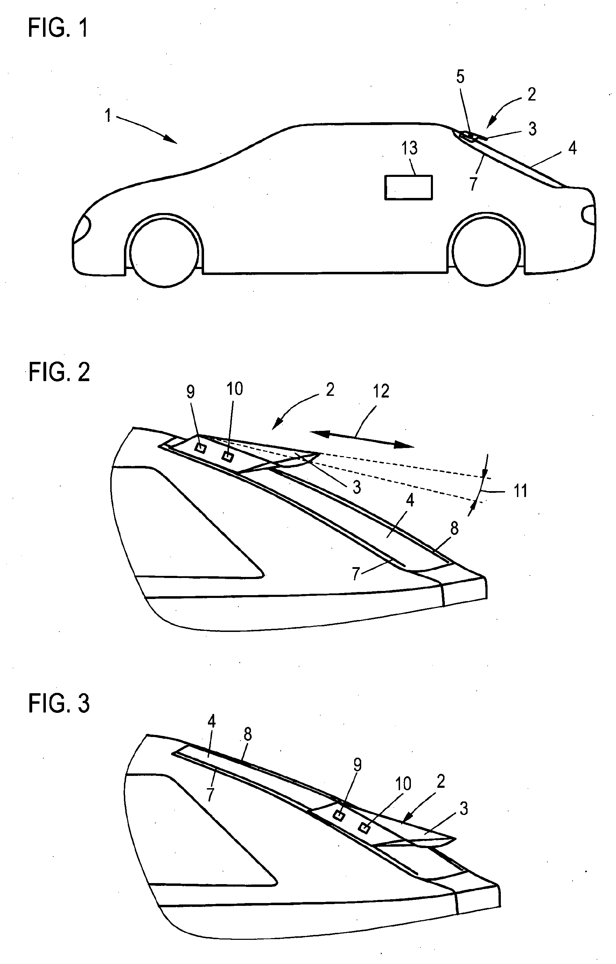

Fig. 1 zeigt ein Kraftfahrzeug 1 mit einer Luftleitelementanordnung 2, die ein Luftleitelement 3 aufweist und im Bereich einer Heckscheibe 4 des Kraftfahrzeugs 1 angeordnet ist. Das Luftleitelement 3 ist mittels der Aktoren 5, 6 entlang je einer Führung 7, 8 bewegbar, die seitlich an der Heckscheibe 4 des Kraftfahrzeugs 1 angeordnet sind. Die Führungen 7, 8 verlaufen, wie nachfolgend in den Figuren 3 bis 5 detailliert dargestellt wird, parallel zur Heckscheibe des Kraftfahrzeugs 1. Insbesondere sind die Führungen 7,8 an den seitlichen Rändern der Heckscheibe 4 angeordnet. In diesem Ausführungsbeispiel wird die Heckscheibe 4 seitlich durch zwei Säulen der Karosserie des Kraftfahrzeugs 1 begrenzt, wobei die Führungen 7, 8 auf je einer Säule angeordnet sind. Hierbei handelt es sich beispielsweise um die C- oder D-Säule des Kraftfahrzeugs. Ersichtlich ist der Krümmungsverlauf der Heckscheibe für den Verlauf der Führungen 7, 8 ausschlaggebend, da die Führungen 7, 8, wie beschrieben, an der Heckscheibe 4 bzw. an dem die Heckscheibe 4 begrenzenden Teil der Karosserie des Kraftfahrzeugs 1 angeordnet sind.

Fig. 2 zeigt einen Ausschnitt des Kraftfahrzeugs 1 von Fig. 1 im Bereich der Heckscheibe 4. Aus Übersichtlichkeitsgründen sind die Aktoren 5, 6 nicht und die Führungen 7, 8 lediglich als Linien dargestellt. Das Luftleitelement 3 weist einen Neigungsversteller 9 und einen Längenversteller 10 auf. Der Neigungsversteller 9 ist dazu ausgebildet, das Luftleitelement 3 um die Querachse des Kraftfahrzeugs 1 zu neigen. Dies ist durch einen Doppelpfeil 11 dargestellt, der verdeutlicht, dass das Luftleitelement 3 beispielsweise gegenüber der Horizontalen oder im Hinblick auf die Krümmung der Heckscheibe 4 geneigt werden kann.

Der Längenversteller 10 ist dazu ausgebildet die Länge des Luftleitelements 3 in der Richtung des freien Endes des Luftleitelements 3 zu verlängern oder zu verkürzen. Dies ist durch einen Doppelpfeil 12 dargestellt.

Die Aktoren 5, 6 sowie der Neigungsversteller 9 und der Längenversteller 10 sind von einer Steuerungseinrichtung 13, die in Fig. 1 dargestellt ist, steuerbar. Es kann somit sowohl die Neigung des Luftleitelements 3, als auch die Länge und die Position des Luftleitelements 3 entlang der Führungen 7, 8, die entlang der Heckscheibe 4 verlaufen, beliebig eingestellt werden. Dazu erzeugt die Steuerungseinrichtung 13 entsprechende Steuersignale an die Stellglieder, also die Aktoren 5, 6, den Neigungsversteller 9 und den Längenversteller 10.

Fig. 2 zeigt das Luftleitelement 3 in einer Position, die im Stand des Kraftfahrzeugs 1 beziehungsweise bei niedrigen Geschwindigkeiten des Kraftfahrzeugs 1 bevorzugt vorliegt. In einem solchen Geschwindigkeitsbereich, mithin beispielsweise 0 bis 50 km/h, insbesondere 0 bis 80 km/h, ist die Veränderung der Umströmung des Kraftfahrzeugs 1, die durch das Luftleitelement 3 verursacht wird, zu vernachlässigen. In diesem Geschwindigkeitsbereich ist mithin das optische Erscheinungsbild des Kraftfahrzeugs 1 beziehungsweise dessen Silhouette für die Positionierung des Luftleitelements 3 entlang der Heckscheibe 4 des Kraftfahrzeugs 1 ausschlaggebend. Das Luftleitelement 3 ist demnach in der obigen Endposition an der Dachkante des Kraftfahrzeugs 1 angeordnet. Die Neigung sowie die Länge des Luftleitelements 3 können nach Belieben beziehungsweise gemäß einem eingestelltem Betriebsmodus des Kraftfahrzeugs angepasst werden. Ist beispielsweise eine sportliche Fahreinstellung beziehungsweise ein sportlicher Betriebsmodus des Kraftfahrzeugs 1 angewählt, so kann das Luftleitelement 3 verlängert und die Neigung des Luftleitelements 3 erhöht werden, um eine sportliche Silhouette des Kraftfahrzeugs 1 zu erreichen.

Fig. 3 zeigt einen Ausschnitt des Kraftfahrzeugs 1 im Bereich der Heckscheibe 4. In Fig. 3 liegt ein Zustand vor, in dem das Kraftfahrzeug 1 beispielsweise in einem Geschwindigkeitsbereich oberhalb von 80 km/h bewegt wird. Um eine Strömungsablösung beziehungsweise einen Strömungsabriss im Bereich der Heckscheibe 4 des Kraftfahrzeugs 1 zu vermeiden, ist das Luftleitelement 3 auf circa zwei Drittel der Länge der Heckscheibe 4 nach unten bewegt. Je nach Anforderung der Fahrsituation kann hierbei die Neigung durch den Neigungsversteller 9 beziehungsweise die Länge durch den Längenversteller 10 beeinflusst werden. Somit kann die Abrisskante beliebig eingestellt werden. Selbstverständlich ist es ebenso möglich das Luftleitelement 3 auch in allen anderen Geschwindigkeitsbereichen, auch im Stillstand in die in Fig. 3 gezeigte Position zu verstellen.

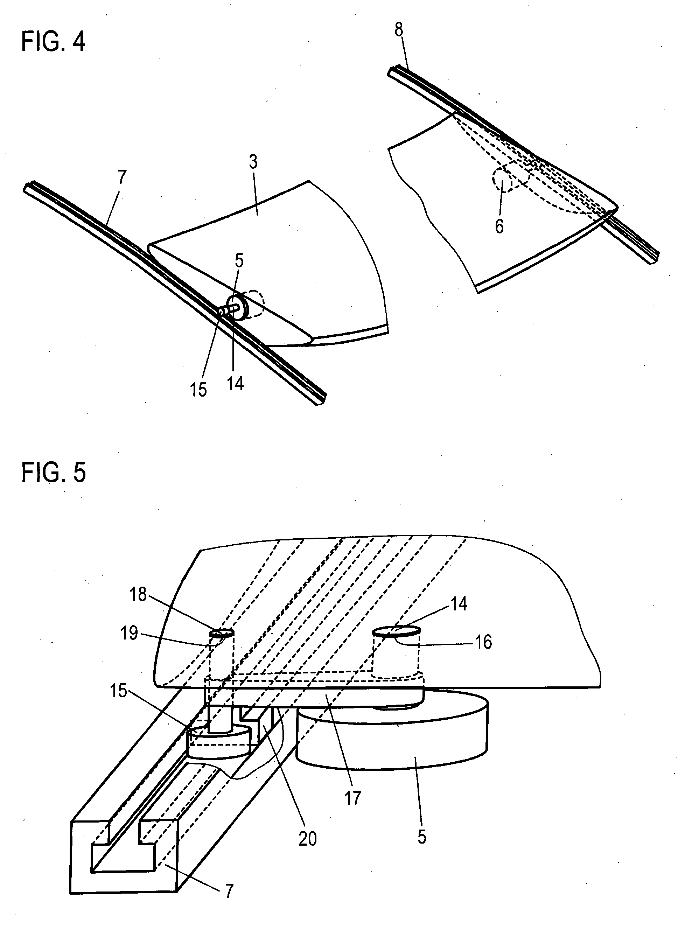

Fig. 4 zeigt eine erste Ausführungsform der Aktoren 5, 6 des Kraftfahrzeugs 1 in einer perspektivischen Darstellung. Aus Übersichtlichkeitsgründen sind lediglich in den Führungen 7, 8 angeordneten Zahnstangen abgebildet. Gemäß dieser Ausführungsform ist der Aktor 5, 6 seitlich am Luftleitelement 3 angeordnet, insbesondere in diesen aufgenommen. Die Aktoren 5, 6 weisen je eine Antriebswelle 14 auf, die je ein Zahnrad 15 aufweist. Die Zahnräder 15 kämmen mit je einer Zahnstange, die jeweils in der Führung 7 beziehungsweise 8 angeordnet sind, die aus Übersichtlichkeitsgründen nicht dargestellt ist. Werden die Aktoren 5, 6 angetrieben, so werden die Antriebswellen 14 und die damit verbundenen Zahnräder 15 angetrieben, die mit den Zahnstangen, die in Führungen 7, 8 angeordnet sind, kämmen. Somit kann je nach Drehrichtung der Aktoren 5, 6 das Luftleitelement 3 entlang der Heckscheibe 4 bewegt werden. In diesem Ausführungsbeispiel werden die Aktoren 5, 6 durch die Steuerungseinrichtung 13 gesteuert und werden synchron bewegt. Besonders vorteilhaft werden die Aktoren 5, 6 durch nicht näher dargestellte und in die Führungen 7, 8 integrierte Elemente mit Energie versorgt.

Die Führungen 7, 8 sind in dem in Fig. 4 dargestellten Ausführungsbeispiel der Luftleitelementanordnung 2 einander gegenüberliegend angeordnet. Die Öffnungen in der Führung 7 beziehungsweise 8 zeigen somit im Wesentlichen in Richtung der Mitte der Heckscheibe 4, mithin zum Luftleitelement 3 hin. Die Antriebswellen 14 der Aktoren 5, 6, die fest am Luftleitelement 3 angeordnet sind, ragen seitlich vom Luftleitelement 3 in die Führungen 7, 8 hinein.

Fig. 5 zeigt eine alternative Ausgestaltung der Aktoren 5, 6 die jeweils in einer Ausnehmung 16 im Luftleitelement 3 gelagert sind. Der Übersichtlichkeit wegen ist nur die in Fahrtrichtung des Kraftfahrzeugs 1 gesehen linke Seite der Luftleitelementanordnung 2 dargestellt. Die Aktoren 5, 6 weisen ebenfalls Antriebswellen 14 auf, die jedoch nicht mit einem Zahnrad 15 direkt verbunden sind. Die Antriebswellen 14 treiben einen Riemen 17 an, der wiederum mit einer Abtriebswelle 18, die in einer Ausnehmung 19 im Luftleitelement 3 angeordnet ist, in Verbindung steht. Die Antriebswelle 14 sowie die Abtriebswelle 18 sind in den Ausnehmungen 16 beziehungsweise 19 im Luftleitelement 3 selbstverständlich drehbar beweglich. Das in die Führung 7, 8 eingreifende Ende der Abtriebswelle 18, weist ein Zahnrad 15 auf, das mit einer nicht näher dargestellten Zahnstange, die in der Führung 7, 8 angeordnet ist, kämmt. Sonach kann eine Drehung der Antriebswelle 14 über den Riementrieb 17 an die Abtriebswelle 18 übertragen werden, wodurch das Zahnrad 15 in der Führung 7, 8 mit der Zahnstange kämmt und somit das Luftleitelement 3 entlang der Führung 7, 8 entlang der Heckscheibe 4 des Kraftfahrzeugs 1 bewegt werden kann.

Ferner ist in Fig. 5 dargestellt, dass das Luftleitelement 3 über Halteelemente 20 verfügt, die einen im Wesentlichen T-förmigen Querschnitt aufweisen. Der T-förmige Querschnitt greift in die Nut der Führung 7, 8, ein wodurch das Luftleitelement 3 an den Führungen 7, 8 gehalten ist. Selbstverständlich sind die Haltelemente 20 entlang der Führungen 7, 8 bewegbar.

Besonders bevorzugt tritt bei den Aktoren 5, 6 in beiden beschriebenen Ausführungsformen im stromlosen Zustand ein Selbsthemmungseffekt auf, sodass das Luftleitelement 3 im stromlosen Zustand der Aktoren 5, 6 nicht bewegt werden kann. Somit wird sichergestellt, dass das Luftleitelement 3 nur durch die Aktoren 5, 6 bewegt werden kann. Die Aktoren 5, 6 werden in dem in Fig. 5 dargestellten Ausführungsbeispiel ebenfalls durch die Steuerungseinrichtung 13 gesteuert und somit synchron angetrieben.

Selbstverständlich ist es möglich, alle Ausführungsbeispiele der Aktoren 5, 6 mit den in Fig. 5 dargestellten Halteelemente 20 zu kombinieren. Dazu muss lediglich die Führung 7, 8 um 90° gedreht und die Halteelemente 20 an entsprechenden Positionen am Luftleitelement 3 angeordnet werden. Selbstverständlich ist es ebenso möglich, den Neigungsversteller 9 sowie den Längenversteller 10 beliebig mit den beiden Ausführungsformen der Aktoren 5, 6, die in den Figuren 4 und 5 gezeigt sind zu kombinieren.

Die Öffnungen der Führung 7, 8 können ferner beispielsweise mit einer Lamelle versehen werden, sodass diese abgedeckt sind und lediglich im Bereich der Antriebswelle 14 beziehungsweise Abtriebswelle 18 beziehungsweise der Halteelemente 20 an diesen anliegen. Dies bietet zum einen den Vorteil, dass keine Fremdkörper in die Führung 7, 8 gelangen könne, ferner ist ein ansprechendes optisches Erscheinungsbild gewährleistet, da die mechanischen Teile, wie beispielsweise die Zahnstange, nicht sichtbar sind.

## Patentansprüche

1. Kraftfahrzeug (1) mit einer Luftleitelementanordnung (2), die wenigstens ein Luftleitelement (3) aufweist und im Bereich einer Heckscheibe (4) des Kraftfahrzeugs (1) angeordnet ist, wobei das wenigstens eine Luftleitelement (3) mittels wenigstens eines Aktors (5, 6) entlang einer Führung (7, 8) bewegbar ist, die seitlich an der Heckscheibe (4) des Kraftfahrzeugs (1) angeordnet ist,
**dadurch gekennzeichnet,**
**dass** der wenigstens eine Aktor (5, 6) an dem wenigstens einen Luftleitelement (3) angeordnet ist.

2. Kraftfahrzeug nach Anspruch 1,
**dadurch gekennzeichnet,**
**dass** der wenigstens eine Aktor (5, 6) eine Antriebswelle (14) aufweist, die über einen Riementrieb (17) mit einer ein Zahnrad (15) aufweisenden Abtriebswelle (18) verbunden ist, die drehbar an dem Luftleitelement (3) gelagert ist oder dass der Aktor (5, 6) ein antreibbares Zahnrad (15) aufweist, wobei das Zahnrad (15) jeweils mit einer in der Führung (7, 8) angeordneten Zahnstange kämmt.

3. Kraftfahrzeug nach Anspruch 1 oder 2,
**dadurch gekennzeichnet,**
**dass** die Luftleitelementanordnung (2) zwei einander gegenüberliegende Führungen (7, 8) aufweist, die seitlich an der Heckscheibe (4) angeordnet sind.

4. Kraftfahrzeug nach einem der vorangehenden Ansprüche,
**dadurch gekennzeichnet,**
**dass** das Luftleitelement (3) über wenigstens ein in der wenigstens einen Führung (7, 8) geführtes und entlang der Führung (7, 8) bewegliches Halteelement (20) mit der Führung (7, 8) verbunden ist.

5. Kraftfahrzeug nach Anspruch 3,
**dadurch gekennzeichnet,**
**dass** der Aktor (5, 6) mit zwei Zahnrädern (15) verbunden ist, die jeweils mit einer der in den Führungen (7, 8) angeordneten Zahnstangen kämmen.

6. Kraftfahrzeug nach Anspruch 3,
**dadurch gekennzeichnet,**
**dass** die Luftleitelementanordnung (2) zwei Aktoren (5, 6) aufweist, von denen jeder mit jeweils einem Zahnrad (15) verbunden ist, wobei die Zahnräder (15) mit jeweils einer Zahnstange einer Führung (7, 8) kämmen.

7. Kraftfahrzeug nach Anspruch 6,
**dadurch gekennzeichnet,**
**dass** die zwei Aktoren (5, 6) miteinander koppelbar oder synchron antreibbar sind.

8. Kraftfahrzeug nach einem der vorangehenden Ansprüche,
**dadurch gekennzeichnet,**
**dass** die Luftleitelementanordnung (2) einen Neigungsversteller (9) aufweist, der dazu ausgebildet ist, eine Neigung des wenigstens einen Luftleitelements (3) um die Querachse des Kraftfahrzeugs (1) zu verändern.

9. Kraftfahrzeug nach einem der vorangehenden Ansprüche,
**dadurch gekennzeichnet,**
**dass** die Luftleitelementanordnung (2) einen Längenversteller (10) aufweist, der dazu ausgebildet ist, das Luftleitelement (3) in der Richtung des freien Endes des Luftleitelements (3) zu verlängern oder zu verkürzen.

## Claims

1. Motor vehicle (1) with an air deflector arrangement (2) that has at least one air deflector (3) and is arranged in the region of a rear window (4) of the motor vehicle (1), wherein the at least one air deflector (3) is movable by means of at least one actuator (5, 6) along a guide (7, 8) arranged on the side of the rear window (4) of the motor vehicle (1), **characterised in that** the at least one actuator (5, 6) is arranged on the at least one air deflector (3).

2. Motor vehicle according to claim 1, **characterised in that** the at least one actuator (5, 6) has a drive shaft (14), which is connected via a belt drive (17) with an output shaft (18) having a toothed wheel (15), which shaft is mounted rotatably on the air deflector (3), or that the actuator (5, 6) has a drivable toothed wheel (15), wherein the toothed wheel (15) engages in each case with a toothed rack arranged in the guide (7, 8).

3. Motor vehicle according to claim 1 or 2, **characterised in that** the air deflector arrangement (2) has two guides (7, 8) lying opposite each other, which are arranged on the sides of the rear window (4).

4. Motor vehicle according to any one of the preceding claims, **characterised in that** the air deflector (3) is connected with the guide (7, 8) via at least one holding element (20) guided in the at least one guide (7, 8) and movable along said guide (7, 8).

5. Motor vehicle according to claim 3, **characterised in that** the actuator (5, 6) is connected with two toothed wheels (15), which each engage with one of the toothed racks arranged in the guides (7, 8).

6. Motor vehicle according to claim 3, **characterised in that** the air deflector arrangement (2) has two actuators (5, 6), each of which is connected with a toothed wheel (15), wherein the toothed wheels (15) each engage with a toothed rack of a guide (7, 8).

7. Motor vehicle according to claim 6, **characterised in that** the two actuators (5, 6) can be coupled together or can be driven synchronously.

8. Motor vehicle according to any one of the preceding claims, **characterised in that** the air deflector arrangement (2) has a tilt adjuster (9), which is configured to change a tilt of the at least one air deflector (3) about the transverse axis of the motor vehicle (1).

9. Motor vehicle according to any one of the preceding claims, **characterised in that** the air deflector arrangement (2) has a length adjuster (10), which is configured to lengthen or to shorten the air deflector (3) in the direction of the free end of the air deflector (3).

## Revendications

1. Véhicule automobile (1) avec un dispositif de conduite d'air (2) qui comporte un élément de conduite d'air (3) et qui est agencé dans la zone d'une lunette arrière (4) du véhicule automobile (1),
dans lequel l'au moins un élément de conduite d'air (3) peut être déplacé au moyen d'au moins un actionneur (5, 6) le long d'un guide (7, 8) qui est agencé latéralement au niveau de la lunette arrière (4) du véhicule automobile (1),
**caractérisé en ce que** l'au moins un actionneur (5, 6) est agencé au niveau de l'au moins un élément de conduite d'air (3).

2. Véhicule automobile selon la revendication 1, **caractérisé en ce que** l'au moins un actionneur (5, 6) comporte un arbre moteur (14) qui est relié par l'intermédiaire d'un mécanisme de courroie (17) à un arbre de sortie (18) qui comporte une roue dentée (15) et qui est logé de manière à pouvoir tourner au niveau de l'élément de conduite d'air (3) ou **en ce que** l'actionneur (5, 6) comporte une roue dentée (15) pouvant être entraînée, laquelle roue dentée (15) s'engrène à chaque fois avec une crémaillère agencée dans le guide (7, 8).

3. Véhicule automobile selon la revendication 1 ou 2, **caractérisé en ce que** le dispositif de conduite d'air (2) comporte deux guides (7, 8) qui sont en face l'un de l'autre et qui sont agencés latéralement au niveau de la lunette arrière (4).

4. Véhicule automobile selon l'une quelconque des revendications précédentes, **caractérisé en ce que** l'élément de conduite d'air (3) est relié au guide (7, 8) par l'intermédiaire d'au moins un élément de fixation (20) guidé dans au moins un guide (7, 8) et déplaçable le long du guide (7, 8).

5. Véhicule automobile selon la revendication 3, **caractérisé en ce que** l'actionneur (5, 6) est relié à deux roues dentées (15) qui s'engrènent à chaque fois avec l'une des crémaillères agencées dans les guides (7, 8).

6. Véhicule automobile selon la revendication 3, **caractérisé en ce que** le dispositif de conduite d'air (2) comporte deux actionneurs (5, 6) parmi lesquels chacun est relié à une roue dentée (15) respective, lesquelles roues dentées (15) s'engrènent à chaque fois avec une crémaillère d'un guide (7, 8).

7. Véhicule automobile selon la revendication 6, **caractérisé en ce que** les deux actionneurs (5, 6) peuvent être couplés l'un à l'autre ou entraînés de manière synchrone.

8. Véhicule automobile selon l'une quelconque des revendications précédentes, **caractérisé en ce que** le dispositif de conduite d'air (2) comporte un réglage d'inclinaison (9) qui est conçu pour modifier une inclinaison de l'au moins un élément de conduite d'air (3) autour de l'axe transversal du véhicule automobile (1).

9. Véhicule automobile selon l'une quelconque des revendications précédentes, **caractérisé en ce que** le dispositif de conduite d'air (2) comporte un réglage de longueur (10) qui est conçu pour allonger ou raccourcir l'élément de conduite d'air (3) en direction de l'extrémité libre de l'élément de conduite d'air (3).
